# EUROPÄISCHE PATENTSCHRIFT

(11) **EP 1 283 163 B1**
(45) Veröffentlichungstag und Bekanntmachung des Hinweises auf die Patenterteilung: **04.05.2005**
(21) Anmeldenummer: 02017177.3
(22) Anmeldetag: 31.07.2002
(51) Int. Cl.: B64C 21/10

(54) **Vorrichtung zur Verringerung des strömungsmechanischen Reibungswiderstandes**
Device for reducing fluidic friction drag
Dispositif pour réduire la traînée de friction fluidique

(30) Priorität: 10.08.2001 DE 10139436
(43) Veröffentlichungstag der Anmeldung: 12.02.2003
(73) Patentinhaber: Airbus Deutschland GmbH, 21129 Hamburg (DE)
(72) Erfinder: Zabka, Werner, Dr.-Ing., 21614 Buxtehude (DE)
(74) Vertreter: Hansmann, Dierk, Dipl.-Ing.

(56) Entgegenhaltungen:
- EP-A- 0 205 289
- WO-A-93/19981
- US-A- 4 284 302
- US-A- 4 907 765
- US-A- 5 133 519

## Beschreibung

Die Erfindung betrifft eine Vorrichtung zur Verringerung des strömungsmechanischen Reibungswiderstandes bei einem von einem Strömungsmedium umströmten Bauteil, insbesondere für ein Flugzeug, mit einer auf der umströmten Oberfläche des Bauteiles angeordneten feinen Rippenkonfiguration, deren Höhenlinien senkrecht zur Strömungsrichtung stehen und wobei der Querschnitt der Rippen in Strömungsrichtung eine Sägezahnform aufweist.

Der Reibungswiderstand moderner Verkehrsflugzeuge beträgt ungefähr 50% des Gesamtwiderstandes und verursacht somit auch 50% des Treibstoffverbrauches. Technische Lösungen zur Reduktion des Reibungswiderstandes zielen auf eine Erhöhung der Laminarität und eine Beruhigung der Turbulenz der Strömung, z. B. durch Turbulenzmanagement mittels Riblets, ab oder auf eine Hybridlaminarisierung durch entsprechende Absaugung.

In der DE 35 34 293 C2 ist eine Einrichtung zur Verringerung des strömungsmechanischen Reibungswiderstandes bei Luft- und Raumfahrzeugen sowie wasserfahrzeugen mit einer Rillenoberflächenkonfiguration beschrieben, die als integrale Rillenoberfläche direkt aus einem Faserverbundwerkstoff-Material der herzustellenden Tragstruktur des Fahrzeuges gebildet ist. Hierbei kann die integrale Rillenoberfläche durch Formgebung bei der Lege-, Oberflächenbehandlungs- oder Wickeltechnik der herzustellenden Tragstruktur gebildet werden.

Ferner ist aus der US-A-5 133 519 eine Anordnung der eingangs genannten Art bekannt geworden, bei der zwecks Verringerung des Strömungswiderstandes Rippen mit sägezahnförmigem Querschnitt senkrecht zur Strömungsrichtung angeordnet sind, wobei bei dieser bekannten Anordnung der Querschnitt des Rippen einen flachen Flankenanstieg mit jeweils einem steilen Abfall der Flanken aufweist.

Der Erfindung liegt nun die Aufgabe zugrunde, eine Vorrichtung der eingangs genannten Art derart auszubilden, daß eine möglichst große Verringerung des strömungsmechanischen Reibungswiderstandes bei einer umströmten Oberfläche eines Bauteiles erreicht wird.

Diese Aufgabe wird erfindungsgemäß dadurch gelöst, daß in Strömungsrichtung die Sägezahriform der Rippen einen steilen Flankenanstieg und einen jeweils flachen Abfall der Flanken aufweist.

Ein besonderer Vorteil der Erfindung besteht darin, daß durch die erfindungsgemäß vorgesehene Strukturierung der Oberfläche primär nicht die Strömungsgrenzschicht selber, sondern direkt die Wechselwirkung zwischen den Teilchen des umströmenden Mediums und der umströmten Oberfläche derart beeinflußt wird, daß der von den Teilchen der Strömung auf die Oberfläche übertragene Tangentialimpuls reduziert wird.

Erfindungsgemäße Ausgestaltungen sind in den weiteren Ansprüchen 2 bis 4 beschrieben.

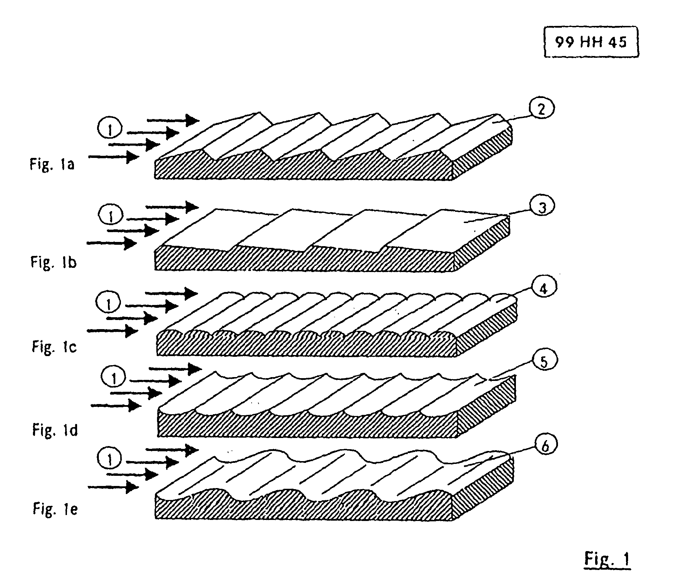

In der Zeichnung ist die Erfindung anhand von Ausführungsbeispielen näher erläutert, wobei lediglich die Figur 1b eine erfindungsgemäße Anordnung zeigt. Es zeigen:
- Fig. 1: die Rippenkonfigurationen der Oberfläche eines umströmten Bauteiles auszugsweise in perspektivischer Seitenansicht;
- Fig. 2: die Ausführungsform von in Strömungsrichtung phasenversetzten Streifen mit Rippenkonfigurationen der Oberfläche eines umströmten Bauteiles auszugsweise in perspektivischer Seitenansicht;
- Fig. 3: die Ausführungsform einer Rippenkonfiguration auf der Oberfläche von Riblets in Dreiseitenansicht, bei der die Höhe der Riblets unverändert bleibt; und
- Fig. 4: die Ausführungsform einer Rippenkonfiguration auf der Oberfläche von Riblets in Dreiseitenansicht, bei der die Höhe der Riblets sich mit der Rippenkonfiguration ändert.

In den Figuren 1 bis 4 ist die Richtung der die Bauteile umströmenden Strömung mit 1 bezeichnet, und es sind alle Rippen der Rippenkonfigurationen bzw. deren Höhenlinien senkrecht zu dieser Strömungsrichtung 1 angeordnet. Hingegen verlaufen die Querschnitte aller Rippenkonfigurationen in Strömungsrichtung 1. Der Querschnitt der Rippen gemäß Fig. 1b weist erfindungsgemäß eine Sägezahnform mit einem steilen Flankenanstieg und einem jeweils flachen Abfall der Flanken in Strömungsrichtung auf.

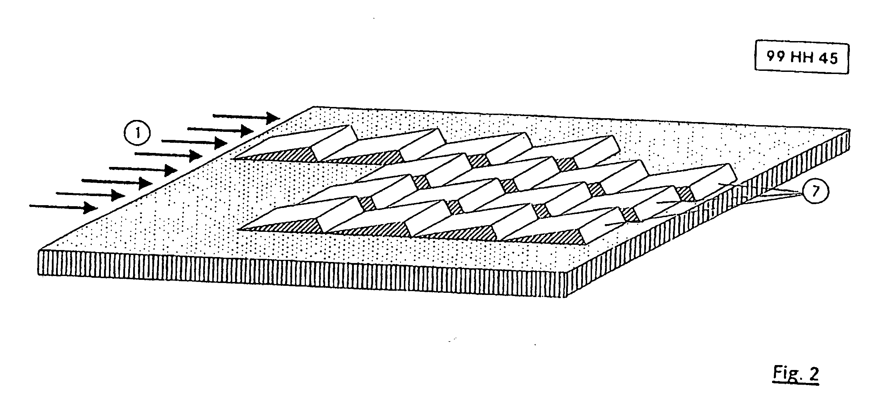

In Fig. 2 sind auf einem von einer Strömung umströmten Bauteil drei in Strömungsrichtung 1 verlaufende Streifen 7 angeordnet, die jeweils eine Anordnung von Rippen in Strömungsrichtung 1 aufweisen. Die Rippen benachbarter Streifen 7 bzw. deren Höhenzüge sind phasenversetzt zueinander angeordnet. Allerdings ist in dem hier dargestelltem Beispiel die Strömungsrichtung entgegengesetzt zur beanspruchten Richtung dargestellt.

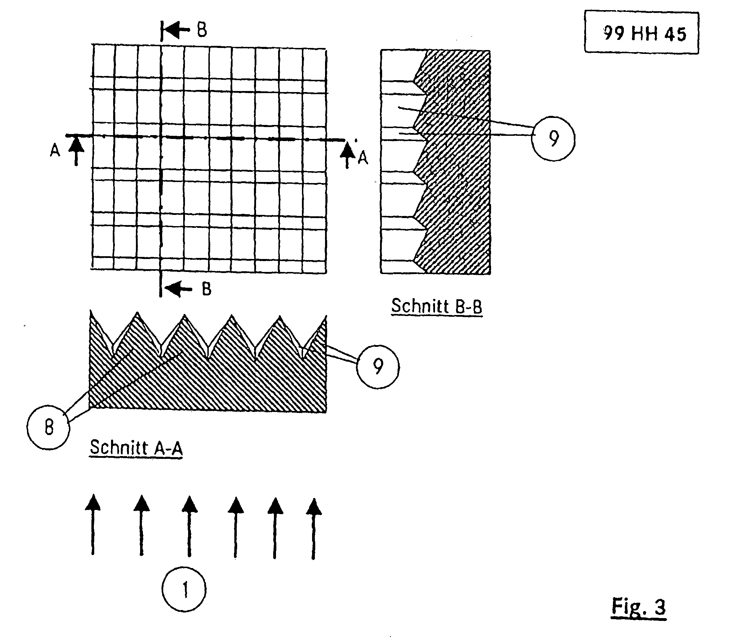

In Fig. 3 ist die senkrecht zur Strömungsrichtung 1 angeordnete Rippenkonfiguration mit zugehörigen sägezahnförmigen Rippen, deren Oberfläche gemäß Schnitt B-B mit 9 bezeichnet ist, in auf einem umströmten Bauteil vorhandenen, in Strömungsrichtung 1 verlaufenden Riblets 8 angeordnet. Die Querschnitte der Riblets 8 sind aus dem Schnitt A-A ersichtlich, wobei die oberste Kante der Riblets 8 als gerade Linie ausgebildet ist, wie aus dem Schnitt B-B zu entnehmen ist.

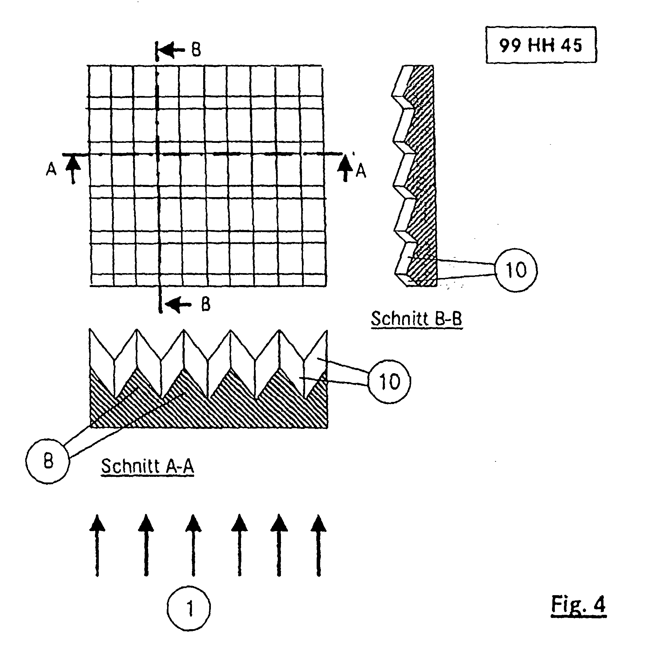

Die aus Fig. 4 ersichtliche Rippenkonfiguration mit Rippen 10, die ebenfalls in auf einem umströmten Bauteil vorhandenen, in Strömungsrichtung 1 verlaufenden Riblets 8 angeordnet ist, unterscheidet sich von der in Fig. 3 dargestellten Rippenkonfigurationen mit zugehörigen Rippen 9 dadurch, daß die jeweils oberste Kante der Riblets 8 dem Querschnitt der Rippenkonfiguration entspricht. Dieses ist im Schnitt B-B der Fig. 4 dargestellt.

## Patentansprüche

1. Vorrichtung zur Verringerung des strömungsmechanischen Reibungswiderstandes bei einem von einem Strömungsmedium umströmten Bauteil, insbesondere für ein Flugzeug, mit einer auf der umströmten Oberfläche des Bauteiles angeordneten feinen Rippenkonfiguration, deren Höhenlinien senkrecht zur Strömungsrichtung stehen und wobei der Querschnitt der Rippen in Strömungsrichtung eine Sägezahnform aufweist, **dadurch gekennzeichnet, daß** in Strömungsrichtung (1) die Sägezahnform der Rippen (3) einen steilen Flankenanstieg und einen jeweils flachen Abfall der Flanken aufweist.

2. Vorrichtung nach Anspruch 1, **dadurch gekennzeichnet, daß** die Rippen (3) in Strömungsrichtung (1) in einzelnen parallel zur Strömungsrichtung (1) verlaufenden Streifen (7) angeordnet sind und daß die Rippen (3) benachbarter Streifen (7) phasenversetzt zueinander angeordnet sind.

3. Vorrichtung nach Anspruch 1, **dadurch gekennzeichnet, daß** die Rippenkonfiguration mit den zugehörigen Rippen (3) in vorhandenen, in Strömungsrichtung verlaufenden Riblets (8) angeordnet ist und daß die jeweils oberste Kante der Riblets (8) als gerade Linie ausgebildet ist.

4. Vorrichtung nach Anspruch 1, **dadurch gekennzeichnet, daß** die Rippenkonfiguration mit den zugehörigen Rippen (3) in vorhandenen, in Strömungsrichtung verlaufenden Riblets (8) angeordnet ist und daß die jeweils oberste Kante der Riblets (8) dem Querschnitt der Rippenkonfiguration entspricht.

## Claims

1. Device for reducing the fluidic frictional drag in the case of a component, in particular for an aircraft, around which component a flow medium flows, with a fine rib configuration arranged on the component surface around which the flow takes place, the height lines of which configuration are perpendicular to the direction of flow and the cross-section of the ribs having a saw-tooth shape in the flow direction, **characterized in that** in the direction of flow (1) the saw-tooth shape of the ribs (3) has a steep flank increase and a flat slope of the flanks in each case.

2. Device according to claim 1, **characterized in that** the ribs (3) are arranged in the direction of flow (1) in individual strips (7) running parallel to the direction of flow (1) and that the ribs (3) of adjacent strips (7) are arranged offset in phase in relation to one another.

3. Device according to claim 1, **characterized in that** the rib configuration with the related ribs (3) is arranged in existing riblets (8) running in the direction of flow and that the top edge respectively of the riblets (8) is formed as a straight line.

4. Device according to claim 1, **characterized in that** the rib configuration with the related ribs (3) is arranged in existing riblets (8) running in the direction of flow and that the top edge respectively of the riblets (8) corresponds to the cross-section of the rib configuration.

## Revendications

1. Dispositif pour réduire la traînée de friction fluidique dans lequel un composant, notamment un avion, le long duquel s'écoule un fluide, présente sur sa surface que balaie le fluide, une configuration fine de nervures dont les lignes de crête sont perpendiculaires à la direction d'écoulement, et ont, en section transversale par rapport à cette direction, la forme de dents de scie, **caractérisé en ce que**, dans la direction d'écoulement (1) la forme en dents de scie des nervures (3) présente un flanc ascendant abrupt suivi d'un flanc en pente douce.

2. Dispositif selon la revendication 1, **caractérisé en ce que** les nervures (3) sont disposées en bandes (7) parallèles à la direction d'écoulement, les nervures (3) de bandes voisines (7) étant déphasées entre elles.

3. Dispositif selon la revendication 1, **caractérisé en ce que** la configuration des nervures avec les nervures correspondantes (3) est disposée dans des riblets (8) orientés selon la direction d'écoulement, chaque arête supérieure des riblets (8) constituant une ligne droite.

4. Dispositif selon la revendication 1, **caractérisé en ce que** la configuration des nervures avec les nervures correspondantes (3) est disposée dans des riblets (8) disposés selon la direction d'écoulement, chaque bord supérieur des riblets (8) correspondant à la section de la configuration des nervures.
